# FASCICULE DE BREVET EUROPEEN

(11) **EP 3 592 637 B1**
(45) Date de publication et mention de la délivrance du brevet: **02.12.2020**
(21) Numéro de dépôt: 18709709.2
(22) Date de dépôt: 27.02.2018
(51) Int. Cl.: B62K 21/04, B62J 45/41, B62J 45/42, B62J 45/00, B62J 11/00, B62J 45/10

(54) **VÉHICULE MOTORISÉ COMPRENANT UN TÉ DE DIRECTION CONNECTÉ**
MOTORISIERTES FAHRZEUG MIT EINER ANGESCHLOSSENEN GABELKRONE
MOTORIZED VEHICLE COMPRISING A CONNECTED FORK CROWN

(30) Priorité: 06.03.2017 FR 1751802
(43) Date de publication de la demande: 15.01.2020
(73) Titulaire: Irider, 72000 Le Mans (FR)
(72) Inventeur: SIMON, Jean-François, 72230 Arnage (FR)
(74) Mandataire: Lequien, Philippe
(86) Numéro de dépôt international: PCT/FR2018/050462
(87) Numéro de publication internationale: WO 2018/162820

(56) Documents cités:
- EP-A1- 1 439 101
- CN-A- 101 200 212
- US-A1- 2008 246 250
- US-B1- 6 976 691

## Description

Le domaine de l'invention est celui de la conception et de la fabrication d'équipements de véhicule motorisé. L'invention concerne plus particulièrement l'intégration d'un système électronique sur un véhicule motorisé comprenant un té de direction.

Un véhicule motorisé comprenant un té de direction correspond à une motocyclette (moto ou scooter), une motomarine ou encore à une motoneige.

Une motocyclette est un véhicule motorisé, sans carrosserie, à deux roues. Selon une conception classique, une motocyclette comprend un cadre sur lequel sont couplées au-moins une roue avant et au-moins une roue arrière par l'intermédiaire de systèmes de suspension et/ou de direction.

Au niveau de la partie avant de la motocyclette, la roue avant est couplée à une fourche reliée au cadre de la motocyclette par un axe de direction et une colonne de direction.

La fourche avant de la motocyclette comprend deux tubes de fourches maintenus en position l'un par rapport à l'autre par l'intermédiaire de deux tés de direction, les tés de direction étant solidaires de l'axe de direction positionné de manière centrale sur les tés de direction. Cet axe de direction est destiné à être mobile en rotation à l'intérieur de la colonne de direction qui est solidaire du cadre de la motocyclette

Le document US 6 976 691 B1 divulgue un véhicule motorisé selon le préambule de la revendication 1.

En fonction des différentes avancées technologiques, les équipements et les fonctionnalités des motocyclettes ont évolué.

Par exemple, les dispositifs de freinage des motocyclettes sont pourvus de systèmes d'assistance au freinage et notamment de systèmes d'antiblocage des roues.

Selon un autre exemple, les motocyclettes peuvent également être pourvues de prises diagnostiques couplées à une informatique embarquée. Ces prises diagnostiques permettent de contrôler électroniquement le fonctionnement de la motocyclette, et, au besoin, de modifier le comportement des organes de la motocyclette.

Sur un autre plan, les nouvelles technologies de l'information et du numérique ont permis la création de véhicules intégrant des systèmes informatiques qui apportent de nouvelles fonctionnalités et informations aux conducteurs et/ou aux occupants de ces véhicules.

Selon cette approche, ces technologies permettent d'obtenir des véhicules dits « connectés ».

Par exemple, une voiture connectée peut être pourvue d'un système électronique se couplant à des réseaux de communication ainsi qu'à l'ordiphone du conducteur de manière à pouvoir étendre les capacités de la voiture et à améliorer l'expérience de conduite du conducteur.

En considérant ces avancées technologiques, les conducteurs de motocyclettes peuvent ainsi avoir une attente concernant l'intégration de ces nouvelles technologies de l'information dans leur motocyclette.

L'attente d'intégration de ces nouvelles technologies peut néanmoins se heurter à l'absence de carrosserie des motocyclettes, ainsi qu'au souhait des conducteurs de motocyclette d'avoir des véhicules agréables à regarder. En conséquence, l'adjonction d'éléments extérieurs disgracieux sur une motocyclette, par exemple un boitier destiné à comporter des éléments électroniques, constituerait un inconvénient susceptible de limiter l'adoption de nouvelles technologies.

L'invention a notamment pour objectif de répondre à cette attente.

Plus précisément, l'invention a pour objectif de proposer une solution permettant de disposer d'un véhicule motorisé avec un té de direction, qui intègre de nouvelles technologies électroniques, notamment en vue de la communication ou la réception d'informations de navigation.

L'invention a également pour objectif de proposer une telle solution qui n'impacte pas ou peu l'apparence du véhicule motorisé.

Ces objectifs, ainsi que d'autres qui apparaîtront par la suite, sont atteints par l'invention qui a pour objet un véhicule motorisé comprenant :
- une fourche avant ;
- un axe de direction mobile en rotation à l'intérieur d'une colonne de direction ;
- au moins un té de direction couplé à l'axe de direction et à la fourche avant ;
- au moins un composant électronique destiné à collecter et/ou transmettre des données relatives à des informations de fonctionnement du véhicule motorisé,
où le té de direction présente un corps dans lequel est ménagée une cavité refermée par un capot, où une carte électronique est logée dans la cavité et apte à centraliser et/ou traiter des données fournies par ledit ou lesdits composants électroniques, où la carte électronique comprend des moyens de commande couplés à au moins un organe du véhicule motorisé, les moyens de commande étant aptes à démarrer, et/ou à arrêter et/ou à modifier le comportement de l'organe à partir de la carte électronique, et où la carte électronique comprend également des moyens d'échanges de données avec une unité informatique externe.

Préférentiellement, le véhicule motorisé est une motocyclette. L'invention peut également s'appliquer à une motomarine ou encore à une motoneige.

Un tel véhicule motorisé selon l'invention permet de répondre à l'attente d'intégration de nouvelles technologies électroniques sur un véhicule motorisé, tout en offrant une solution qui n'impacte pas ou peu l'aspect du véhicule motorisé.

En effet, grâce au té de direction qui loge une carte électronique, le véhicule motorisé peut bénéficier de nouvelles technologies grâce aux fonctionnalités offertes par la carte électronique qui va centraliser et/ou traiter des données fournies par un ou plusieurs composants électroniques situés sur le véhicule motorisé, ces composants électroniques permettant de collecter et/ou de transmettre des données relatives à des informations de fonctionnement du véhicule motorisé.

Dans le cas où le véhicule motorisé est une motocyclette, l'intégration de la carte électronique à l'intérieur d'une cavité ménagée dans le corps du té de direction permet d'éviter d'adjoindre à la motocyclette un boitier supplémentaire qui serait situé sur une partie extérieure de la motocyclette, et qui pourrait être disgracieux aux yeux du possesseur de la motocyclette et d'autres personnes.

Les moyens de commande confèrent à la carte électronique la capacité de déclencher certaines fonctions du véhicule motorisé.

Par exemple, dans le cadre d'une instruction envoyée par le propriétaire du véhicule motorisé à la carte électronique, cette dernière peut déclencher le démarrage du véhicule motorisé.

Ces moyens de commande peuvent également, selon un autre exemple d'application où le véhicule motorisé est une motocyclette, permettre le déclenchement d'autres organes de la motocyclette, tels que les phares, les feux de détresse...

Selon l'invention, la carte électronique comprend des moyens d'échanges de données avec une unité informatique externe.

De tels moyens d'échanges de données avec une unité d'informations externe peuvent prendre la forme de modules de communication du type :
- utilisant un standard de communication (Bluetooth) permettant un échange bidirectionnel de données à très courte distance ;
- utilisant un ou plusieurs réseau de téléphonie mobile à haut débit pour échanger des données ;
- utilisant un réseau cellulaire bas débit, économe en énergie, du type utilisé pour constituer « l'internet des objets » (technologie développée sous la marque « SIGFOX »).

Ces modules permettent ainsi à la carte électronique d'échanger des données, par exemple sur un réseau cellulaire bas débit avec un serveur informatique, ou via une connexion à très courte distance avec un ordiphone qui pourrait être celui du conducteur du véhicule motorisé.

Grâce à l'invention, le conducteur du véhicule motorisé bénéficie de données traitées et centralisées par la carte électronique qui seraient collectées par un des composants électroniques du véhicule motorisé.

Avantageusement, la carte électronique comprend des moyens de géolocalisation.

Grâce à tels moyens de géolocalisation, la carte électronique peut centraliser et/ou traiter des données de géolocalisation et ainsi enrichir les fonctionnalités offertes par la carte électronique.

Par exemple, dans le cadre d'une solution où la carte électronique comporte une fonction d'alarme, et en combinaison avec les moyens d'échanges de données avec une unité informatique externe, la carte électronique peut faire office d'alarme silencieuse. Pour cette fonction, la carte électronique peut transmettre des données de géolocalisation du véhicule motorisé suite à la détection de certains événements préprogrammés associés à une tentative de vol ou de dégradation.

Selon une caractéristique avantageuse, la carte électronique comprend un accéléromètre.

Grâce à l'accéléromètre, la carte électronique permet de centraliser et de traiter des données relatives à des changements de position du véhicule motorisé et/ou à des vibrations et/ou à des chocs.

L'accéléromètre permet d'enrichir les données traitées par la carte électronique. Il permet également d'améliorer une fonction d'alarme de la carte électronique. En d'autres termes et par exemple dans le cas où le véhicule motorisé est une motocyclette, l'accéléromètre peut détecter une chute de la motocyclette, son déplacement, ou encore son soulèvement.

Avantageusement, le véhicule motorisé comprend des moyens de raccordement électrique de la carte électronique à un circuit d'alimentation électrique du véhicule motorisé.

Ces moyens de raccordement électriques permettent d'alimenter la carte électronique à partir de la batterie et/ou de l'alternateur du véhicule motorisé.

Selon une caractéristique préférentielle, le véhicule motorisé comprend une batterie de secours logée dans la cavité, la batterie de secours étant destinée à alimenter électriquement la carte électronique.

Une telle batterie de secours alimentant électriquement la carte électronique permet de s'affranchir, au moins temporairement, d'une alimentation à partir de la batterie du véhicule motorisé.

Dans le cas où la carte électronique logée dans la cavité comporte une fonction d'alarme, la carte électronique est ainsi indépendante du circuit d'alimentation électrique du véhicule motorisé. En d'autres termes, si des personnes souhaitant voler le véhicule motorisé débranchent la batterie du véhicule motorisé pour chercher à désactiver l'alarme, l'alarme (formée au minimum par la réunion de la carte électronique et de la batterie de secours logées dans la cavité) ne sera pas impactée par l'action de ces personnes.

Préférentiellement, le composant électronique appartient au groupe suivant :
- capteur de vitesse ;
- capteur de niveau d'essence ;
- capteur sur contacteur de point mort ;
- connecteur à une prise diagnostique d'une informatique embarquée du véhicule motorisé.

Selon un mode de réalisation préféré de l'invention, le corps du té de direction est monobloc, le corps présentant deux logements de couplage et de serrage de tubes de fourche, la cavité étant située entre les logements de couplage et de serrage.

Une telle conception du té de direction permet d'optimiser l'emplacement de la cavité et de limiter les modifications visuelles résultant de l'adjonction de la cavité dans le té de direction par rapport à un té de direction classique.

Avantageusement, le véhicule motorisé comporte une caméra intégrée dans le té de direction et couplée à la carte électronique.

Une telle caméra enrichie avantageusement les fonctionnalités offertes par le té de direction du véhicule motorisé selon l'invention.

D'autres caractéristiques et avantages de l'invention apparaîtront plus clairement à la lecture de la description suivante de deux modes de réalisation préférentiels de l'invention, donnés à titre d'exemples illustratifs et non limitatifs, et des dessins annexés parmi lesquels :
- la figure 1 est une représentation schématique d'un véhicule motorisé (une motocyclette) selon l'invention ;
- les figures 2 et 3 sont des représentations schématiques selon des vues en perspective du corps d'un té de direction selon un premier mode de réalisation ;
- la figure 4 est une représentation schématique selon une vue en perspective d'un té de direction, selon le premier mode de réalisation, avec le capot refermant la cavité du corps ;
- la figure 5 est une représentation schématique selon une vue du dessous du corps du té de direction, selon le premier mode de réalisation, logeant la carte électronique ;
- la figure 6 est une représentation schématique selon une vue en perspective du corps du té de direction, selon le premier mode de réalisation, illustrant la face avant du té de direction ;
- les figures 7 et 8 sont des représentations schématiques selon des vues en perspective du corps d'un té de direction selon un second mode de réalisation ;
- les figures 9 et 10 sont des représentations schématiques selon des vues éclatées du corps d'un té de direction selon le second mode de réalisation.

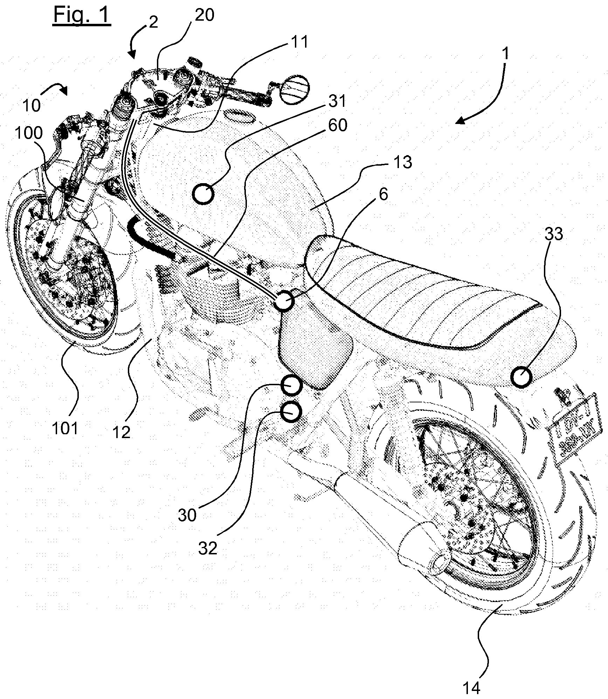

En référence à la figure 1, le véhicule motorisé 1 est une motocyclette. Ce véhicule motorisé comprend :
- un cadre 12 supportant des organes de la motocyclette tels que, entre autres, le moteur, le réservoir 13, ou encore la selle ;
- une fourche avant 10 couplant la roue avant 101 au cadre 12 ;
- une roue arrière 14.

Plus précisément, la fourche avant 10 couple la roue avant 101 au cadre 12 par l'intermédiaire de deux tubes de fourche 100 solidarisés ensemble par l'intermédiaire d'un système de tés de direction (dont un té de direction inférieur et un té de direction 2 supérieur). Les tés de direction encadrent et maintiennent en place un axe de direction positionné de manière central par rapport au té. Cet axe de direction est monté mobile en rotation à l'intérieur d'une colonne de direction 11 solidaire du cadre 12.

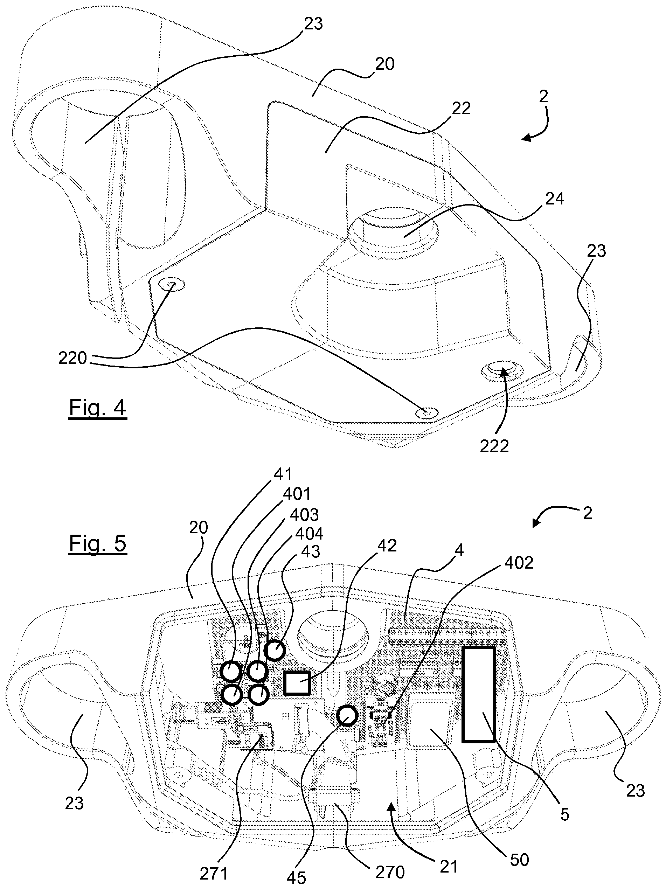

Selon le principe de l'invention et tel qu'illustré par les figures 1, 2, 3 et 5, le té de direction 2 supérieur présente un corps 20 dans lequel est ménagée une cavité 21. En référence à la figure 4, la cavité du corps 20 est destinée à être refermée par un capot 22.

Tel que cela est expliqué plus en détails par la suite, la cavité 21 loge une carte électronique apte à centraliser et/ou traiter les données fournies par au moins un composant électronique destiné à collecter et/ou transmettre des données relatives à des informations de fonctionnement du véhicule motorisé.

En effet, tel qu'illustré par la figure 1, le véhicule motorisé (la motocyclette) comprend des composants électroniques qui collectent et/ou qui transmettent les données relatives à des informations de fonctionnement de la motocyclette. La véhicule motorisé 1 comprend notamment comme composants électroniques :
- un capteur de vitesse 30 ;
- un capteur de niveau d'essence 31, couplé au réservoir 13 ;
- un capteur sur contacteur de point mort 32 ;
- un connecteur 33 à une prise diagnostique d'une informatique embarquée du véhicule motorisé.

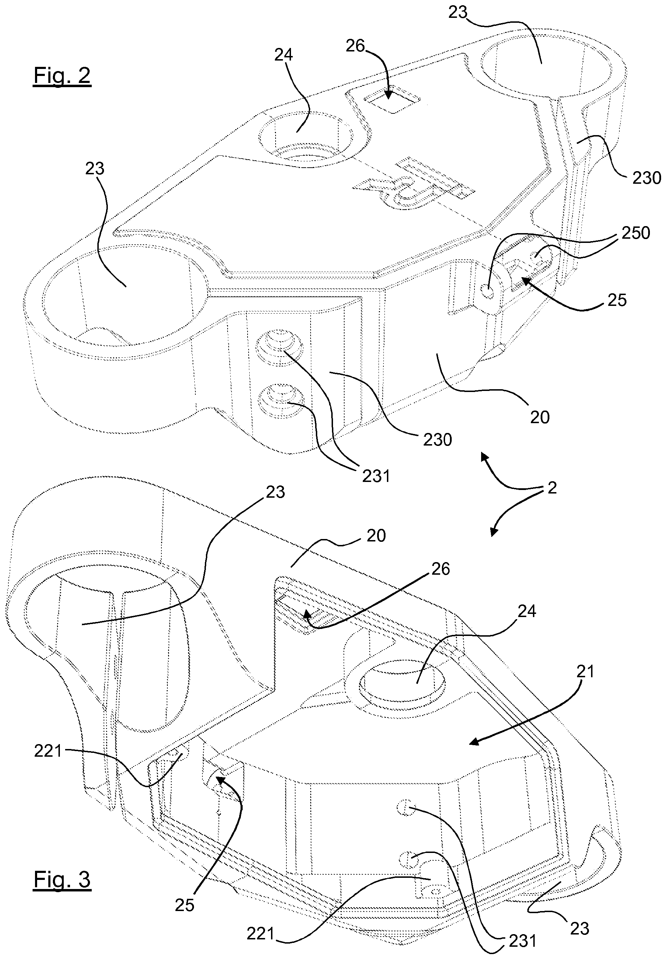

En référence aux figures 2, 3 et 4, le té de direction 2 selon l'invention comporte deux éléments dont un corps 20 qui est monobloc et un capot 22. Le corps et le capot sont réalisés préférentiellement en aluminium.

Le corps 20 présente deux logements de couplage et de serrage 23 destinés à recevoir les tubes de fourche 100.

En référence à la figure 3 et selon le premier mode de réalisation, la cavité 21 est située entre ces logements de couplage et de serrage.

En référence aux figures 2, 3 et 4, le té de direction 2 présente également un moyen de couplage 24 à l'axe de direction. Ce moyen de couplage 24 est formé par la réunion du corps 20 et du capot 22.

Selon les figures 2 et 3, le corps 20, en complément des logements de couplage et de serrage 23, présente deux pattes de serrage 230 destinées chacune à être resserrée sur le corps par l'intermédiaire de vis complémentaires de deux trous taraudés 231 situés sur ces pattes de serrage. En vissant les vis complémentaires dans les deux trous taraudés, on enserre les tubes de fourche préalablement insérés dans les logements de couplage et de serrage 23.

Tel qu'illustré par les figures 2, 3 et 6, le corps 20 présente également :
- un premier espace de communication 25 avec un espace situé en avant et au-dessus du té de direction, le té de direction comprenant, au niveau de ce premier espace de communication,
une excroissance avec des moyens de fixation 250 à un organe complémentaire ;
- un deuxième passage de communication 26 avec un espace situé au-dessus du corps 20 du té de direction 2 ;
- un troisième passage de communication 27 avec un espace situé en avant et au-dessous du té de direction, le té de direction comprenant, au niveau de ce troisième espace de communication, une caméra 270 destiné à filmer vers l'avant du véhicule motorisé.

L'organe complémentaire, destiné à être couplé aux moyens de fixation 250 situés sur l'excroissance, peut par exemple correspondre à un compte-tour, un phare avant ou encore une bulle de motocyclette.

Tel qu'illustré par les figures 3 et 4, le capot 22 est couplé sur le corps 20 à l'aide de vis 220 complémentaires de trous taraudés situés sur des pattes de fixation 221 du corps 20 du té de direction 2.

En référence à la figure 4, le capot 22 présente une ouverture de communication 222 notamment apte à laisser passer des câbles de connexion destinés à relier la carte électroniques aux composants électroniques situés sur le véhicule motorisé.

Selon la figure 5 et tel qu'évoqué précédemment, le véhicule motorisé comprend une carte électronique 4 qui est logée dans la cavité 21 ménagée dans le corps 20 du té de direction 2.

Cette carte électronique 4 est destinée à centraliser et/ou traiter des données fournies par les composants électroniques cités précédemment.

La carte électronique 4 comprend :
- des moyens d'échanges de données avec une unité informatique externe ;
- des moyens de géolocalisation 41 ;
- un accéléromètre 42 ;
- des moyens de commande 43 couplés à des organes du véhicule motorisé.

Les moyens d'échanges de données correspondent à :
- un module de communication à haut débit 401 se connectant à des réseaux cellulaires haut-débit ;
- un module de communication à bas-débit et à basse consommation 402 se connectant à un réseau cellulaire bas débit ;
- un module de communication à courte distance 403 par onde radio ;
- un module de de communication sans-fil 404 apte à créer un réseau informatique entre des unités informatiques externes (ordiphone, ordinateur, ...).

Les moyens de commande 43 permettent à la carte électronique 4 de démarrer, d'arrêter ou de modifier le comportement d'un organe du véhicule motorisé. Selon un exemple d'application, suite à une instruction de préchauffage du moteur envoyée à la carte électronique 4, cette dernière peut déclencher le démarrage du véhicule motorisé.

En référence à la figure 1, le véhicule motorisé 1 (la motocyclette) peut comprendre des moyens de raccordement électriques 60 de la carte électronique 4 à un circuit d'alimentation électrique 6 du véhicule motorisé. Ce circuit d'alimentation électrique du véhicule motorisé intègre par exemple une batterie et un alternateur.

Selon la figure 5, le véhicule motorisé comprend une batterie de secours 5 qui est logée dans la cavité 21 du té de direction 2. Cette batterie est destinée à alimenter électriquement la carte électronique 4 par l'intermédiaire d'un transformateur de puissance 50.

En cas d'un défaut d'approvisionnement en électricité à partir du circuit d'alimentation électrique du véhicule motorisé, la batterie de secours 5 peut prendre le relais et continuer à alimenter la carte électronique située dans la cavité du corps du té de direction.

Grâce à ces composants et selon ce mode de réalisation où le véhicule motorisé est une motocyclette, la carte électronique peut réaliser une géolocalisation de la motocyclette. Cette géolocalisation permet de réaliser un suivi de la moto en temps réel. En cas de suspicion d'un vol de la moto, une alerte est envoyée au conducteur, et un suivi silencieux de la motocyclette peut être réalisé grâce à l'émission d'un signal sur le réseau cellulaire bas débit.

La carte électronique située dans le té de direction peut également réaliser une détection automatique de l'état du véhicule motorisé (à l'arrêt, démarrée, ou roulante, ...) et permet d'adapter, en fonction de paramètres préréglés, les fonctionnalités disponibles au conducteur du véhicule motorisé.

Grâce au module de communication sans fil apte à créer un réseau informatique, le conducteur peut également connecter ces équipements informatiques à un réseau wifi privé généré par la carte électronique situé dans le té de direction.

La carte électronique située dans le té de direction peut également faire office de clé virtuelle à l'aide de ses moyens de commande. En effet, le conducteur peut démarrer et arrêter le véhicule motorisé depuis :
- une application présente sur son téléphone ;
- par la voix (détectée par exemple par son téléphone) ;
- depuis une montre connectée.

En référence à la figure 5, la cavité 21 peut également comporter une mémoire 45. Cette mémoire permet de stocker des données collectées et/ou transmises par les composants électroniques.

Tel qu'évoqué précédemment, le véhicule motorisé comprend également une caméra 270. En référence à la figure 5, cette caméra 270 est intégrée dans le té de direction 2.

Plus précisément, on observe un objectif de caméra qui passe au travers du troisième passage de communication présenté par le té de direction, et la carte électronique 4 comporte un contrôleur de caméra 271 couplé à cet objectif de caméra.

Selon un exemple d'application, la caméra et la mémoire permettent de stocker des photos ou des vidéos d'un trajet du véhicule motorisé.

Enfin, tel qu'évoqué précédemment, l'accéléromètre permet également au té de direction et à la carte électronique de posséder des fonctions de détection de chute et/ou de vol. Plus précisément, des évènements dangereux pour le véhicule motorisé peuvent être détectés soit :
- une chute ;
- un déplacement de la motocyclette ;
- un soulèvement de la motocyclette ;

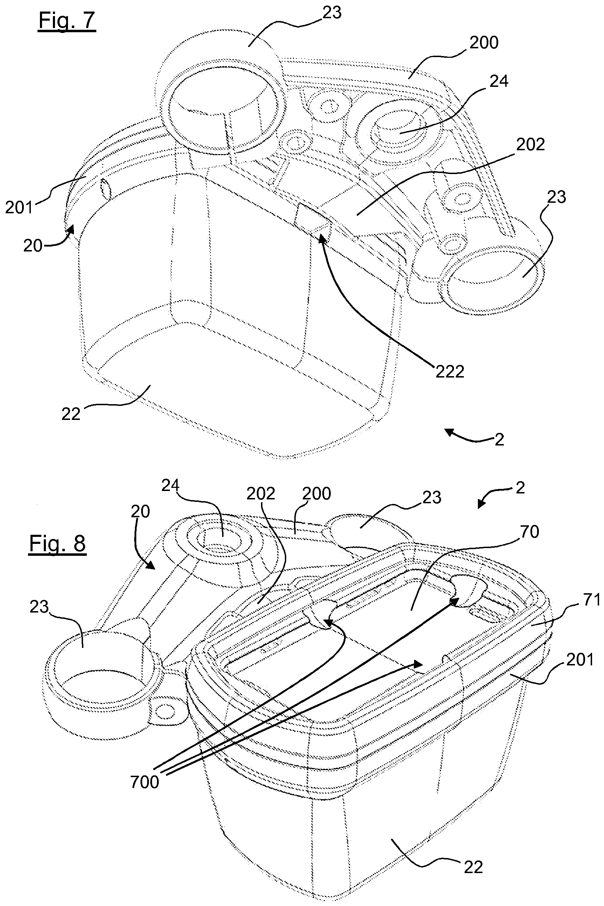

En référence aux figures 7 à 10, un deuxième mode de réalisation du té de direction est décrit ci-après.

Le té de direction 2 supérieur présente un corps 20.

Ce corps 20 présente une cavité 21. La cavité est refermée par un capot 22.

Le corps 20 comprend également :
- des logements de couplage et de serrage 23 destinés à recevoir les tubes de fourche 100 ;
- un moyen de couplage 24 à l'axe de direction.

A la différence du premier mode de réalisation, le corps 20 présente une cavité 21 qui n'est pas située entre les logements de couplage et de serrage 23.

En effet, la cavité 21 est positionnée de manière excentrée par rapport à une partie centrale 200 du té de direction 2.

Plus précisément, selon ce mode de réalisation le corps 20 du té de direction 2 comprend :
- une partie centrale 200, présentant les logements de couplage et de serrage 23 ainsi que le moyen de couplage 24 à l'axe de direction ;
- une partie déportée 201, présentant la cavité 21 ;
- un bras 202 couplant la partie déportée 201 à la partie centrale 200.

Préférentiellement, la partie centrale 200, la partie déportée 201 et le bras 202 forment un ensemble monobloc.

Ce corps 20 est avantageusement en aluminium.

La partie déportée 201 est destinée à être située en avant du té de direction 2.

Selon le présent mode de réalisation illustré par les figures 7 à 10, le capot 22 prend une forme de cuve. De cette manière, la cavité ménagée dans le corps 20 du té de direction, et plus précisément dans la partie déportée 201 du corps 20, présente un volume important lorsque le capot 22 referme la cavité 21.

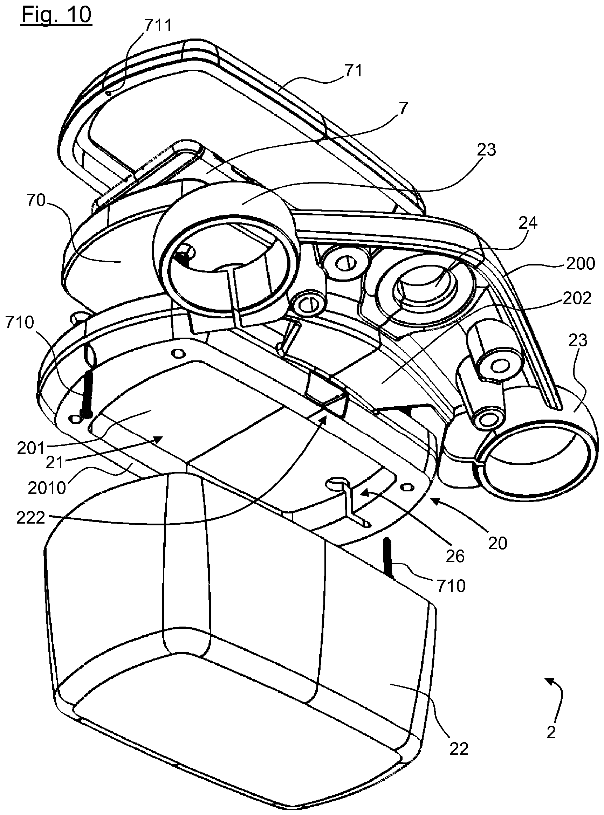

En référence à la figure 10, la partie déportée 201 du corps 20 du té de direction 2 présente un rebord périphérique inférieur 2010 complémentaire du capot 22.

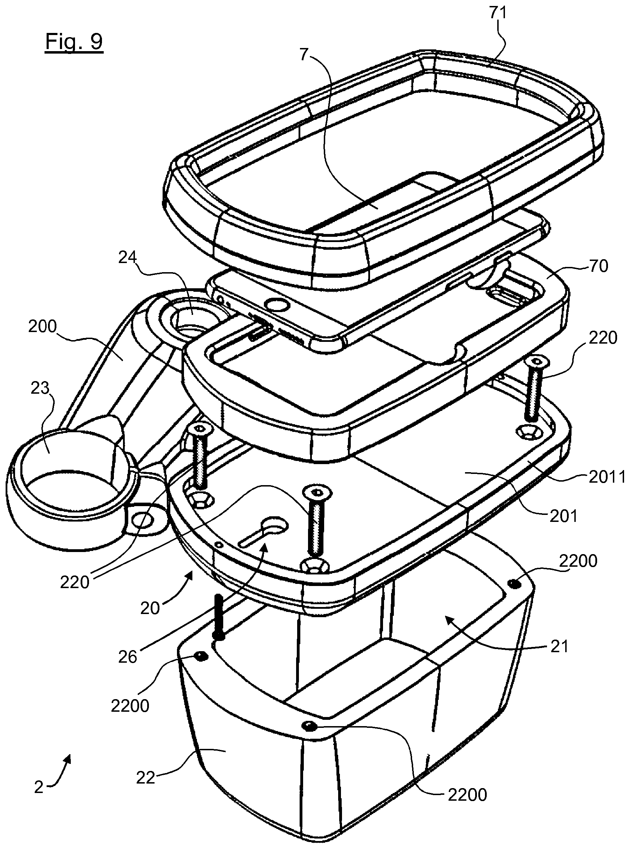

Lors de la mise en place du capot, ce dernier doit être rapporté sur ce rebord périphérique inférieur 2010, puis, tel qu'illustré par la figure 9, des vis 220 complémentaires de trous taraudés 2200 situées sur le capot 22 sont utilisées pour fixer le capot au corps 20 du té de direction. Ces vis sont notamment vissées depuis une face supérieure de la partie déportée 201 du té de direction 2.

Selon le principe de l'invention, une carte électronique (non représentée) est logée dans la cavité. Cette carte électronique est apte à centraliser et/ou traiter des données fournies par ledit ou lesdits composants électroniques, et comprend des moyens de commande couplés à au moins un organe du véhicule motorisé, les moyens de commande étant aptes à démarrer, et/ou à arrêter et/ou à modifier le comportement de l'organe à partir de la carte électronique.

Tel qu'illustré par les figures 9 et 10, la partie déportée 201 du corps 20 présente un deuxième passage de communication 26 entre la cavité 21 et un espace situé au-dessus du corps 20 du té de direction 2.

En référence aux figures 7 et 10, le té de direction 2 présente une ouverture de communication 222 notamment apte à laisser passer des câbles de connexion destinés à relier la carte électronique aux composants électroniques situés sur le véhicule motorisé. A la différence du premier mode de réalisation, cette ouverture de communication 222 est présentée par la partie déportée 201 du corps 20 et non par le capot 22.

Selon les figures 8 à 10, le té de direction 2 comprend des moyens d'intégration d'une unité informatique externe 7, notamment mobile et communicante, tel qu'un ordiphone (téléphone). Cette unité informatique externe est destinée à coopérer avec la carte électronique logée dans la cavité, et servir à afficher des informations relatives au véhicule motorisé par le biais de l'écran de l'unité informatique externe.

Cette unité informatique externe 7 peut par exemple être utilisée pour servir de compteur de vitesse numérique.

Ces moyens d'intégration de l'unité informatique externe 7 comprennent :
- une face supérieure de la partie déportée 201 du corps 20 du té de direction ;
- un support d'accueil 70 de l'unité informatique externe 7 ;
- un couvercle 71.

La face supérieur de la partie déportée 201 du corps 20 présente un rebord périphérique supérieur 2011 complémentaire du couvercle 71.

Tel qu'illustré par la figure 10, des vis d'assemblage 710 complémentaire de trous 711 situés sur le couvercle 71 permettent d'assembler le couvercle sur la partie déportée 201 du corps 20 du té de direction 2.

Le support d'accueil 70 est accueilli dans un renfoncement présenté par la face supérieure de la partie déportée 201, ce renfoncement étant plus précisément délimité par le rebord périphérique supérieur 2011.

Le support d'accueil 70 est spécifique de l'unité informatique externe 7 et présente à cet effet une empreinte complémentaire de la forme de l'unité informatique externe 7. Selon un autre mode de réalisation non illustré, le support d'accueil pourrait être apte à accueillir des unités informatiques externes de formes différentes en présentant une capacité de déformation suffisamment importante.

Tel qu'illustré sur la figure 8, le support d'accueil 70 présente des échancrures 700 permettant de faciliter l'extraction de l'unité informatique externe 7 du support d'accueil 70.

Selon le présent mode de réalisation, le support d'accueil 70 présente une capacité de déformation élastique. Le support d'accueil 70 est notamment en silicone.

Cette capacité de déformation élastique permet d'emboîter l'unité informatique externe 7 à l'intérieur de l'empreinte.

La capacité de déformation élastique du support d'accueil 70 ainsi que l'empreinte présentée par ledit support d'accueil forment des moyens de maintien de l'unité informatique externe 7 dans le support d'accueil 70.

Selon une caractéristique préférentielle non illustrée, le té de direction comprend un chargeur électrique par induction. A cet effet, le support d'accueil comprend un logement apte à recevoir une antenne de recharge à induction. Cette antenne de recharge est couplée à la carte électronique située à l'intérieur de la cavité par l'intermédiaire du deuxième passage de communication 26 (illustré sur les figures 9 et 10).

Le logement est situé en dessous de l'empreinte et destiné à permettre une recharge par induction de l'unité informatique externe 7.

Le couvercle 71 est évidé. Il permet ainsi d'insérer l'unité informatique externe dans l'empreinte du support d'accueil 70, d'accéder à l'unité informatique externe 7 pour interagir avec, ou enfin pour l'extraire de l'empreinte.

Lors de l'assemblage du couvercle 71 sur la partie déportée 201, le couvercle vient emprisonner le support d'accueil 70 pour le maintenir en position. En emprisonnant le support d'accueil 70, le couvercle 71 permet également de limiter les déformations possibles du support d'accueil 70 et ainsi d'améliorer la capacité du support d'accueil à maintenir l'unité informatique externe 7 à l'intérieur de l'empreinte.

Le couvercle peut être en aluminium ou en plastique.

Selon le présent mode de réalisation illustré par la figure 8, la partie déportée 201 du corps 20 est essentiellement située dans le même plan que la partie 200 du corps 20. L'orientation de l'écran destiné à être présenté par l'unité informatique externe est ainsi dépendante de l'orientation des tubes de fourches sur lesquels le té de direction est assemblé.

Selon un autre mode de réalisation non illustré, le té de direction peut comprendre des moyens de modifications de l'inclinaison de l'écran. A cet effet, le bras couplant la partie déportée à la partie centrale peut présenter une articulation, ou un adaptateur apte à modifier l'inclinaison de l'écran peut être positionné sur la face supérieure de la partie déportée, en dessous du support d'accueil et du couvercle.

Bien que cela ne soit pas décrit, le premier mode de réalisation et le deuxième mode de réalisation peuvent être au moins partiellement combinés ensemble.

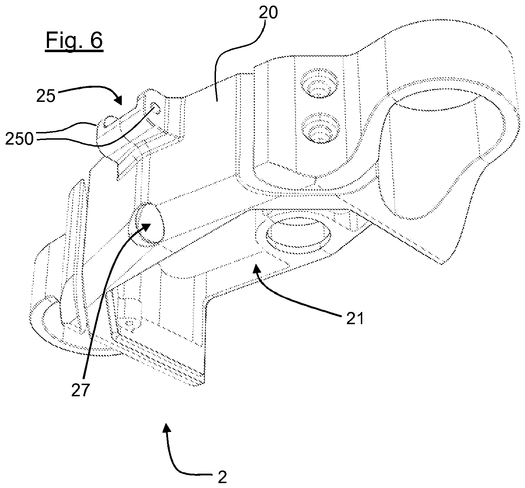

Par exemple, le capot 22 de la partie déportée 201 du té de direction 2 du deuxième mode de réalisation (illustré figure 8) peut présenter un troisième passage de communication 27 avec un espace situé en avant et au-dessous du té de direction 2 comme pour le corps 20 du té de direction 2 du premier mode de réalisation (illustré figure 6). Le té de direction pouvant alors comprendre, au niveau de ce troisième espace de communication, une caméra destinée à filmer vers l'avant du véhicule motorisé.

## Revendications

1. Véhicule motorisé (1) comprenant :
- une fourche avant (10) ;
- un axe de direction mobile en rotation à l'intérieur d'une colonne de direction (11) ;
- au moins un té de direction (2) couplé à l'axe de direction et à la fourche avant ;
- au moins un composant électronique destiné à collecter et/ou transmettre des données relatives à des informations de fonctionnement du véhicule motorisé,
où le té de direction présente un corps (20) dans lequel est ménagée une cavité (21) refermée par un capot (22), **caractérisé en ce qu'**il comprend une carte électronique (4) logée dans la cavité et apte à centraliser et/ou traiter des données fournies par ledit ou lesdits composants électroniques,
et **en ce que** la carte électronique (4) comprend :
- des moyens de commande (43) couplés à au moins un organe du véhicule motorisé, les moyens de commande étant aptes à démarrer, et/ou à arrêter et/ou à modifier le comportement de l'organe à partir de la carte électronique ;
- des moyens d'échanges de données avec une unité informatique externe.

2. Véhicule motorisé (1) selon la revendication précédente, **caractérisé en ce que** la carte électronique (4) comprend des moyens de géolocalisation (41).

3. Véhicule motorisé (1) selon l'une quelconque des revendications précédentes, **caractérisé en ce que** la carte électronique (4) comprend un accéléromètre (42).

4. Véhicule motorisé (1) selon l'une quelconque des revendications précédentes, **caractérisé en ce qu'**il comprend des moyens de raccordement électrique (60) de la carte électronique (4) à un circuit d'alimentation électrique (6) du véhicule motorisé.

5. Véhicule motorisé (1) selon l'une quelconque des revendications précédentes, **caractérisé en ce qu'**il comprend une batterie de secours (5) logée dans la cavité (21), la batterie de secours étant destinée à alimenter électriquement la carte électronique (4).

6. Véhicule motorisé (1) selon l'une quelconque des revendications précédentes, **caractérisé en ce que** le composant électronique appartient au groupe suivant :
- capteur de vitesse (30) ;
- capteur de niveau d'essence (31) ;
- capteur sur contacteur de point mort (32) ;
- connecteur (33) à une prise diagnostique d'une informatique embarquée du véhicule motorisé.

7. Véhicule motorisé (1) selon l'une quelconque des revendications précédentes, **caractérisé en ce que** le corps (20) du té de direction (2) est monobloc, le corps présentant deux logements de couplage et de serrage (23) de tubes de fourche (100), la cavité (21) étant située entre les logements de couplage et de serrage.

8. Véhicule motorisé (1) selon l'une quelconque des revendications précédentes, **caractérisé en ce qu'**il comporte une caméra (270) intégrée dans le té de direction (2) et couplée à la carte électronique (4).

## Patentansprüche

1. Motorisiertes Fahrzeug (1), umfassend:
- eine vordere Gabel (10);
- eine in einer Lenksäule (11) rotatorisch bewegliche Lenkachse;
- mindestens eine Gabelkrone (2), die an die Lenkachse und an die vordere Gabel gekoppelt ist;
- mindestens eine elektronische Komponente, die bestimmt ist, Daten, die sich auf Betriebsinformationen des motorisierten Fahrzeugs beziehen, zu sammeln und/oder zu übertragen,
wobei die Gabelkrone einen Körper (20) aufweist, in dem ein Hohlraum (21) eingerichtet ist, der von einer Abdeckung (22) verschlossen ist,
**dadurch gekennzeichnet, dass** sie eine elektronische Karte (4) umfasst, die in dem Hohlraum untergebracht ist und imstande, Daten, die von dem oder den elektronischen Komponenten bereitgestellt werden, zu zentralisieren und/oder zu verarbeiten,
und dass die elektronische Karte (4) umfasst:
- Steuermittel (43), die an mindestens ein Organ des motorisierten Fahrzeugs gekoppelt sind, wobei die Steuermittel imstande sind, das Verhalten des Organs ab der elektronischen Karte zu starten und/oder zu stoppen und/oder zu verändern,
- Datenaustauschmittel mit einer externen IT-Einheit.

2. Motorisiertes Fahrzeug (1) nach vorangehendem Anspruch, **dadurch gekennzeichnet, dass** die elektronische Karte (4) Geolokalisierungsmittel (41) umfasst.

3. Motorisiertes Fahrzeug (1) nach einem der vorangehenden Ansprüche, **dadurch gekennzeichnet, dass** die elektronische Karte (4) einen Beschleunigungsmesser (42) umfasst.

4. Motorisiertes Fahrzeug (1) nach einem der vorangehenden Ansprüche, **dadurch gekennzeichnet, dass** es elektrische Verbindungsmittel (60) der elektronischen Karte (4) mit einem elektrischen Versorgungskreis (6) des motorisierten Fahrzeugs umfasst.

5. Motorisiertes Fahrzeug (1) nach einem der vorangehenden Ansprüche, **dadurch gekennzeichnet, dass** es eine Notbatterie (5) umfasst, die im Hohlraum (21) untergebracht ist, wobei die Notbatterie bestimmt ist, die elektronische Karte (4) elektrisch zu versorgen.

6. Motorisiertes Fahrzeug (1) nach einem der vorangehenden Ansprüche, **dadurch gekennzeichnet, dass** die elektronische Komponente zu der folgenden Gruppe gehört:
- Geschwindigkeitssensor (30);
- Benzinstandssensor (31);
- Sensor auf Totpunktkontakt (32);
- Verbinder (33) mit einer Diagnosesteckdose einer On-Board-Informatik des motorisierten Fahrzeugs.

7. Motorisiertes Fahrzeug (1) nach einem der vorangehenden Ansprüche, **dadurch gekennzeichnet, dass** der Körper (20) der Gabelkrone (2) einteilig ist, wobei der Körper zwei Kopplungs- und Spannaufnahmen (23) für Gabelrohre (100) aufweist, wobei sich der Hohlraum (21) zwischen den Kopplungs- und Spannaufnahmen befindet.

8. Motorisiertes Fahrzeug (1) nach einem der vorangehenden Ansprüche, **dadurch gekennzeichnet, dass** es eine Kamera (270) aufweist, die in die Gabelkrone (2) integriert und mit der elektronischen Karte (4) gekoppelt ist.

## Claims

1. A motorised vehicle (1) comprising:
- a front fork (10);
- a steering shaft capable of rotating inside a steering column (11);
- at least one fork crown (2) coupled to the steering shaft and to the front fork;
- at least one electronic component intended to collect and/or transmit data relating to the operation of the motorised vehicle,
where the fork crown has a body (20) in which there is formed a cavity (21) closed by a cover (22), **characterised in that** it comprises an electronic board (4) housed in the cavity and
able to centralise and/or process the data supplied by said electronic components,
and **in that** the electronic board (4) comprises:
- control means (43) coupled to at least one member of the motorised vehicle, the control means being able to start, and/or stop and/or modify the behaviour of the member from the electronic board;
- means for exchanging data with an external computerised unit.

2. The motorised vehicle (1) according to the preceding claim, **characterised in that** the electronic board (4) comprises geolocation means (41).

3. The motorised vehicle (1) according to any one of the preceding claims, **characterised in that** the electronic board (4) comprises an accelerometer (42).

4. The motorised vehicle (1) according to any one of the preceding claims, **characterised in that** it comprises means for electrically connecting (60) the electronic board (4) to an electrical supply circuit (6) of the motorised vehicle.

5. The motorised vehicle (1) according to any one of the preceding claims, **characterised in that** it comprises an emergency battery (5) housed in the cavity (21), the emergency battery being intended to electrically supply the electronic board (4).

6. The motorised vehicle (1) according to any one of the preceding claims, **characterised in that** the electronic component belongs to the following group:
- speed sensor (30);
- petrol level sensor (31);
- sensor on neutral contactor (32);
- connector (33) to a diagnostic socket of an embedded computerised unit of the motorised vehicle.

7. The motorised vehicle (1) according to any one of the preceding claims, **characterised in that** the body (20) of the fork crown (2) is single-piece, the body having two housings for coupling and clamping (23) fork tubes (100), the cavity (21) being located between the coupling and clamping housings.

8. The motorised vehicle (1) according to any one of the preceding claims, **characterised in that** it includes a camera (270) integrated in the fork crown (2) and coupled to the electronic board (4).
